# NEUE EUROPÄISCHE PATENTSCHRIFT

(11) **EP 1 670 649 B2**
(45) Veröffentlichungstag und Bekanntmachung des Hinweises auf die Entscheidung über den Einspruch: **05.04.2017**
(45) Hinweis auf die Patenterteilung: 31.07.2013
(21) Anmeldenummer: 04764914.0
(22) Anmeldetag: 07.09.2004
(51) Int. Cl.: B42D 25/346, B42D 25/351, B42D 25/355, B42D 25/369, B42D 25/373, B42D 25/43

(54) **FOLIENSICHERHEITSELEMENT MIT DURCHBRECHUNGSBEREICH**
FILM SECURITY ELEMENT COMPRISING A PERFORATED AREA
ELEMENT DE SECURITE SOUS FORME DE FILM

(30) Priorität: 11.09.2003 DE 10342252
(43) Veröffentlichungstag der Anmeldung: 21.06.2006
(60) Teilanmeldung: 12000584.8
(73) Patentinhaber: Giesecke & Devrient GmbH, 81667 München (DE)
(72) Erfinder: TAUBER, Reinhard, 83714 Miesbach (DE)
(74) Vertreter: Metzler, Volker
(86) Internationale Anmeldenummer: PCT/EP2004/009971
(87) Internationale Veröffentlichungsnummer: WO 2005/025891

(56) Entgegenhaltungen:
- EP-A- 0 093 009
- EP-A- 0 498 186
- WO-A-95/10420
- WO-A2-02/03104
- WO-A2-03/054297
- WO-A2-2004/069560
- DE-A- 1 632 482
- DE-A- 10 226 114
- US-A- 4 126 373
- US-A- 5 393 099
- US-A- 6 036 232

## Beschreibung

Die Erfindung betrifft einen Datenträger, wie eine Banknote, Wertpapier oder Ausweiskarte mit einem auf seiner Oberfläche angeordneten Foliensicherheitselement mit einem Foliensubstrat, das mit einem Sicherheitsmerkmal versehen ist. Die Erfindung betrifft auch Herstellungsverfahren für einen derartigen Datenträgers.

Datenträger und insbesondere Wertdokumente werden zur Absicherung in der Regel mit Sicherheitselementen ausgestattet, die eine Überprüfung der Echtheit des Datenträgers gestatten und zugleich als Schutz vor unerlaubter Reproduktion des Datenträgers dienen. Als Sicherheitselemente kommen vielfach optisch variable Elemente zum Einsatz, die dem Betrachter unter unterschiedlichen Betrachtungswinkeln einen unterschiedlichen Bildeindruck, beispielweise einen unterschiedlichen Farbeindruck, vermitteln.

Zur Steigerung der Fälschungssicherheit ist bekannt, solche Sicherheitselemente mit durchgehenden Öffnungen in den Wertdokumenten zu kombinieren. Beispielsweise wird in der Druckschrift WO 95/10420 vorgeschlagen, in ein Wertdokument nach seiner Herstellung eine durchgehende Öffnung zu stanzen und diese mit einer Abdeckfolie einseitig zu verschließen, die die Öffnung allseits überragt. Ist die Abdeckfolie zumindest in Teilbereichen transparent, scheint der Untergrund beim Kopieren des Wertdokuments durch und macht die Kopie somit als solche erkennbar. Die Abdeckfolie kann zusätzlich ein Sicherheitsmerkmal, wie etwa ein Hologramm, aufweisen.

Die DE 1 632 482 A betrifft Ausweiskarten mit einem Unterschriftsfeld und zielt darauf ab, Radierungen auf dem Unterschriftsfeld erkennbar zu machen. Hierzu wird das Unterschriftsfeld durch einen beschreibbaren Überzug markiert, der rasterartige Durchbrüche oder Einbrüche aufweist.

Die DE 102 26 114 A1 betrifft ein Sicherheitselement für Sicherheitspapiere, das zwei unterschiedliche Sicherheitsmerkmale aufweist, die auf gegenüberliegenden Seiten des Sicherheitselements angeordnet sind. Bei dem Sicherheitselement kann es sich insbesondere um eine Folie mit einer darauf aufgebrachten, stellenweise unterbrochenen, opaken Beschichtung handeln.

Der Erfindung liegt die Aufgabe zugrunde, einen Datenträger mit einen Sicherheitselement der eingangs genannten Art anzugeben, das eine wirkungsvolle Absicherung des Datenträgers erlaubt. Der abgesicherte Datenträger soll sowohl schwer nachzustellen sein als auch eine Überprüfung der Echtheit oder Unversehrtheit durch einen Laien ermöglichen.

Diese Aufgabe wird durch den Datenträger mit den Merkmalen des Hauptanspruchs gelöst. Herstellungsverfahren für einen solchen Datenträger sind Gegenstand nebengeordneter Ansprüche. Weiterbildungen der Erfindung sind in den Unteransprüchen angegeben.

Das Foliensicherheitselement des Datenträgers weist nach einem ersten Aspekt der Erfindung einen Durchbrechungsbereich mit zumindest einer das Element durchbrechenden Aussparung auf. In einer bevorzugten Ausgestaltung enthält der Durchbrechungsbereich dabei eine Mehrzahl von das Element durchbrechenden Aussparungen in Form von Mustern, Zeichen oder Codierungen. Der Durchbrechungsbereich kann auch eine ausgedehnte Aussparung aufweisen, durch die ein darunter liegendes Sicherheitsmerkmal des Datenträgers erkennbar ist.

Die Erfindung beruht in diesem Aspekt auf dem Gedanken, dass ein solcher Durchbrechungsbereich vor allem dann schwer nachzuahmen ist, wenn er eine Vielzahl kleiner, in einem charakteristischen Muster angeordneter Aussparungen enthält oder einen mit kleinräumigen Strukturen versehenen Rand aufweist. Die Aussparungen können in Form eines Bildmotivs, etwa eines stilisierten Portraits oder eines architektonischen Motivs, oder in Form von Zahlen- oder Buchstabenzeichen angeordnet sein, die eine bestimmte Information darstellen, wie etwa die Denomination oder das Ausgabeland einer Banknote.

Gleichzeitig ist der Durchbrechungsbereich für den Benutzer haptisch leicht fühl- und erfassbar. Das Vorhandensein oder Nichtvorhandensein eines Durchbrechungsbereichs kann somit vielfach ohne optische Kontrolle sicher festgestellt werden. Es versteht sich, dass das Vorhandensein des Durchbrechungsbereichs auch maschinell überprüft werden kann. In Verbindung mit einem unter dem Durchbrechungsbereich angeordneten Sicherheitselement ergeben sich zusätzliche Absicherungsmöglichkeiten, die weiter unten genauer beschrieben werden.

Die Erfindung betrifft einen Datenträger, wie eine Banknote, ein Wertpapier oder eine Ausweiskarte, auf dessen Oberfläche ein Foliensicherheitselement der beschriebenen Art angeordnet ist. Dadurch kann eine Wechselbeziehung zwischen den Informationen auf dem Datenträger und den Informationen auf dem Folienelement hergestellt werden, durch die Fälschungs- oder Manipulationsversuche verhindert oder zumindest leicht erkennbar werden.

Der Datenträger weist ein von dem Foliensicherheitselement zumindest teilweise überdecktes Sicherheitsmerkmal auf, das durch den Durchbrechungsbereich visuell und/oder maschinell erkennbar ist. Durch die Überdeckung wird das Sicherheitsmerkmal geschützt und ist für Eingriffe nicht oder nur schwer zugänglich. Zugleich kann das Sicherheitsmerkmal über den Durchbrechungsbereich des Foliensicherheitselements leicht nachgewiesen werden.

Bei dem erfindungsgemäßen Datenträger ist das Sicherheitsmerkmal in das Innere des Datenträgers eingebettet und als Wasserzeichen ausgebildet.

Nach einer bevorzugten Ausgestaltung enthält der Datenträger einen transparenten oder transluzenten Bereich, der durch den Durchbrechungsbereich erkennbar ist. Ein transluzenter Bereich kann bei einem Wertdokument beispielsweise durch Einwirken bestimmter Substanzen auf das Papiersubstrat, wie etwa konzentrierte Schwefelsäure, Zinkchlorid, Fette, Harze, Wachse, synthetische Polymere, wie Terpenpolymere, Polyurethane und Methacrylharz, erzeugt werden. Enthält der Datenträger ein transparentes Substrat, etwa eine transparente Kunststofffolie, so kann der transparente Bereich einfach durch eine oder mehrere Lücken in einer aufgebrachten opaken oder semitransparenten Deckschicht gebildet sein. Insgesamt ergibt sich ein durchgehend transparenter oder transluzenter Bereich, der dem Datenträger in Durchsicht ein auffälliges und charakteristisches Erscheinungsbild verleiht.

Gemäß einer vorteilhaften Weiterbildung der Erfindung enthält der Datenträger zumindest zwei Sicherheitsmerkmale mit unterschiedlichen physikalischen Eigenschaften, die durch den Durchbrechungsbereich visuell und/oder maschinell erkennbar sind. Die Sicherheitsmerkmale können dabei nebeneinander, übereinander, oder einander teilweise überlappend angeordnet sein. Ein erstes Sicherheitsmerkmal kann etwa wegen seiner einfachen Überprüfbarkeit für den Betrachter ausgewählt sein, während ein zweites Sicherheitsmerkmal unter dem Gesichtspunkt einer besonders hohen Fälschungssicherheit ausgewählt ist.

Der Durchbrechungsbereich des Foliensicherheitselements bildet nach einer vorteilhaften Weiterbildung der Erfindung visuell und/oder maschinell erfassbare Informationen, die zu anderen Informationen auf dem Datenträger oder dem Foliensicherheitselement inhaltsgleich sind oder diese ergänzen. Beispiele für derartige Informationen stellen die Denomination einer Banknote, die Währung, das Emissionsdatum, das Land, die Druckerei oder anderes Ausstattungsmerkmal des Datenträgers dar. Eine oder mehrere der genannten Informationen können bei der Echtheitsprüfung ausgelesen und weiterverarbeitet werden. Durch eine solche Entsprechung kann eine Beziehung zwischen Datenträger und Foliensicherheitselement hergestellt werden, die Manipulationen, wie etwa das Ablösen und Übertragen des Foliensicherheitselements auf einen anderen Datenträger, leicht offenbar macht.

Bei einer zweckmäßigen Ausgestaltung der Erfindung ist zumindest ein Teil der Informationen auf dem Datenträger durch den Durchbrechungsbereich visuell und/oder maschinell erfassbar.

Die Foliensicherheitselemente können einen Sicherheitsstreifen, einen Sicherheitsfaden und insbesondere ein flächiges auf einen Datenträger appliziertes Transferelement bilden.

Als "Transferelement" im Sinne der Erfindung wird ein Foliensicherheitselement bezeichnet, das auf einer separaten Trägerschicht, beispielsweise einer Kunststofffolie, in der umgekehrten Reihenfolge, wie sie später auf dem Sicherheitspapier zu liegen kommt, vorbereitet wird und anschließend mittels einer Klebstoff- oder Lackschicht in den gewünschten Umrissformen auf das Sicherheitspapier übertragen wird. Die Trägerschicht kann nach dem Übertrag von dem Schichtaufbau des Sicherheitselements abgezogen werden oder als Schutzschicht als fester Bestandteil des Sicherheitselements auf dem Schichtaufbau verbleiben.

Die einzelnen Transferelemente können auf der Trägerschicht als separate Einzelelemente in den zu übertragenden Umrissformen vorbereitet werden. Alternativ wird die Schichtfolge der Transferelemente in kontinuierlicher Form auf der Trägerschicht vorgesehen. Derartige Trägerschichten mit voneinander beabstandeten einzelnen Transferelementen oder einem kontinuierlich verlaufenden Schichtaufbau werden im Folgenden als "Transfermaterial" bezeichnet und die auf der Trägerschicht angeordnete Schichtfolge des Sicherheitselements als "Übertragungslage".

Im Falle der kontinuierlichen Übertragungslage wird das Transfermaterial anschließend über eine Klebstoffschicht mit dem Sicherheitspapier verbunden und die Klebstoffschicht über entsprechende Prägewerkzeuge aktiviert, so dass die Übertragungslage nur in den aktivierten Bereichen an dem Sicherheitspapier haftet. Alle übrigen Bereiche werden anschließend mit der Trägerschicht abgezogen. Alternativ kann auch die Kleberschicht in Form des zu übertragenden Sicherheitselements ausgeführt sein. Als Klebstoffe werden vorzugsweise Heißschmelzkleber verwendet. Es können jedoch auch beliebige andere Klebstoffe, wie Reaktionslacke, verwendet werden.

Das Foliensicherheitselement ist zur weiteren Erhöhung der Fälschungssicherheit im Register zu einem eingebetteten Merkmal des Datenträgers aufgebracht. Insbesondere ist das Foliensicherheitselement so aufgebracht, dass der Durchbrechungsbereich des Foliensicherheitselements im Register zu dem genannten Merkmal des Datenträgers steht, so dass dieses für den Betrachter oder ein Lesegerät durch den Durchbrechungsbereich hindurch erkennbar ist.

Bei dem eingebetteten des Datenträgers handelt es sich um ein Wasserzeichen.

Es versteht sich, dass ein flächiger Datenträger nicht nur auf einer Seite, sondern auch auf beiden Seiten jeweils mit einem Foliensicherheitselement der beschriebenen Art versehen werden kann. Beispielsweise kann ein transparenter oder transluzenter Bereich des Datenträgers zwischen zwei Foliensicherheitselemente mit entsprechend angeordneten Durchbrechungsbereichen eingebettet sein, um einen durchgehenden, durchscheinenden Bereich des Datenträgers zu schaffen.

Die Erfindung enthält auch Verfahren zur Herstellung der beschriebenen Datenträger. Um einen Datenträger mit einem Foliensicherheitselement nach der Erfindung herzustellen
- wird ein Foliensicherheitselement bereitgestellt, das ein Foliensubstrat mit einem Sicherheitsmerkmal des Foliensubstrats umfasst,
- wird ein mit einem Sicherheitsmerkmal versehener Datenträger-Rohkörper bereitgestellt,
   wird ein Durchbrechungsbereich in das Foliensicherheitselement eingebracht, der zumindest eine das Element durchbrechende Aussparung umfasst, und
- wird das durchbrochene Foliensicherheitselement so auf den Datenträger-Rohkörper, der gegebenenfalls einen Durchbrechungsbereich aufweist, aufgebrach, dass das Sicherheitsmerkmal des Datenträgers durch den Durchbrechungsbereich erkennbar ist.

Der Begriff Datenträger-Rohkörper bezeichnet dabei den Datenträger ohne Foliensicherheitselement, also etwa eine bedruckte Banknote oder ein Sicherheitspapier, das mit dem Foliensicherheitselement versehen werden soll.

Der Durchbrechungsbereich wird in dem Foliensicherheitselement bzw. Datenträger mit Vorteil durch Perforierung und/oder Stanzung erzeugt

Das Foliensicherheitselement ist bei den vorhergehenden Ausführungen stets auf den Datenträger aufgebracht Es versteht sich jedoch für den Fachmann, dass das Foliensicherheitselement auch nach Art eines Sicherheitsfadens oder eines Fenstersicherheitsfadens vollständig oder teilweise in einen Datenträger, insbesondere in ein Wertdokument, eingebettet werden kann.

Weitere Beispiele im Zusammenhang mit der Erfindung und Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet

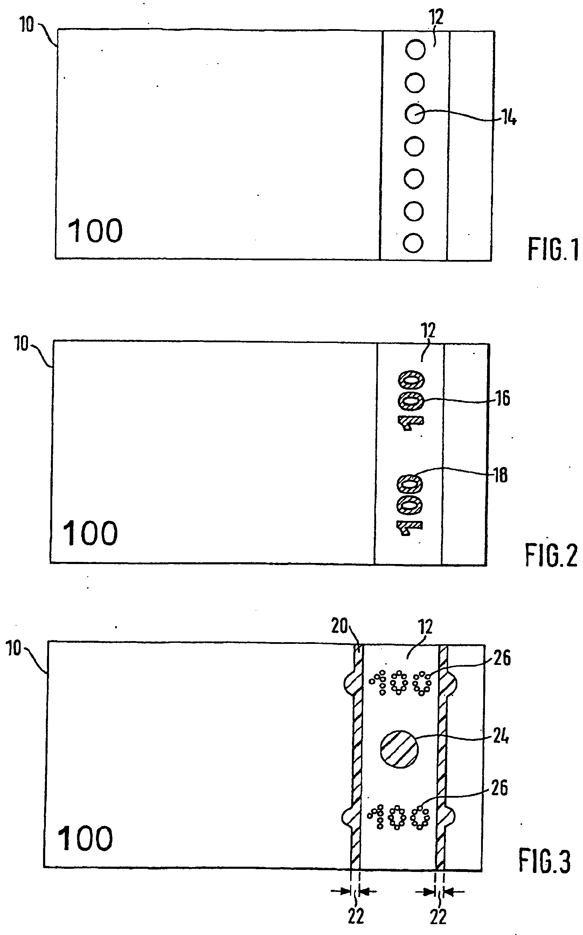

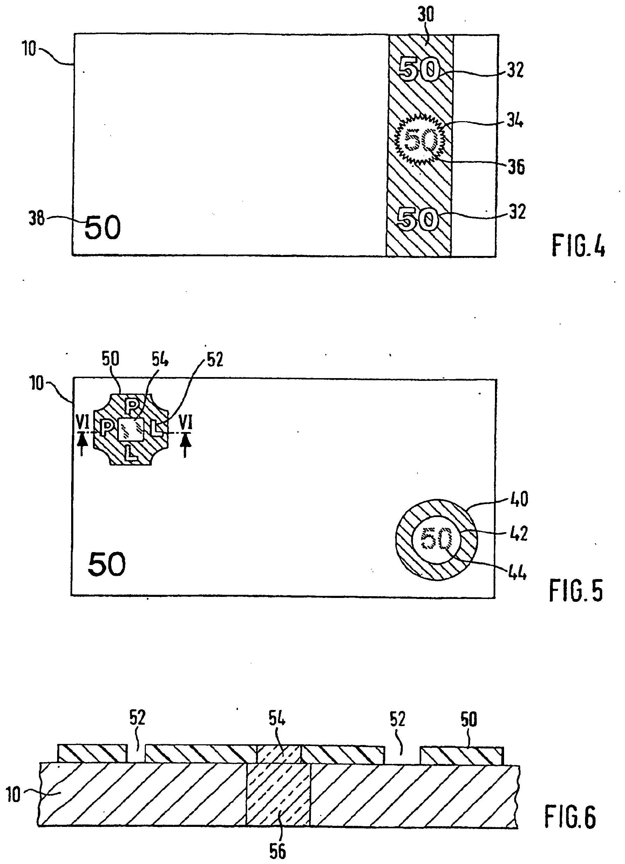

Es zeigen im Einzelnen:
Fig. 1
   eine schematische Darstellung einer Banknote mit einem aufgebrachten Folienapplikationsstreifen,
Fig. 2 bis 3
   weitere Banknoten mit aufgebrachten Folienapplikationsstreifen,
Fig. 4
   ein Ausführungsbeispiel einer Banknote mit aufgebrachten Folienapplikationsstreifen,
Fig. 5
   eine Banknote mit zwei verschiedenen Folienapplikationselementen in Patchform, jeweils nach einem weiteren Ausführungsbeispiel der Erfindung, und
Fig. 6
   einen Schnitt durch eines der Folienapplikationselemente von Fig. 5 entlang der Linie VI-V,
wobei die Figuren 2, 3, 4 und 6 Ausführungsformen betreffen die nicht zur Erfindung gehören.

Fig. 1 zeigt eine schematische Darstellung einer Banknote 10, die mit einem mittels Heißschmelzkleber aufgebrachten Hologramm-Folienapplikationsstreifen 12 versehen ist Der Folienapplikationsstreifen 12 weist eine Kunststoffschicht bzw. Lackschicht als Trägerfolie auf, die mit Beugungsstrukturen in Form einer Reliefstruktur versehen ist. Auf die Kunststoffschicht ist eine metallische Reflexionsschicht, typischerweise aus Aluminium, aufgebracht. Derartige Folienapplikationsstreifen sind dem Fachmann an sich bekannt, so dass auf eine genauere Beschreibung verzichtet werden kann.

Aus dem Folienapplikationsstreifen 12 sind nun eine Reihe von Öffnungen 14 ausgestanzt, die durch die gesamte Dicke des Streifens 12 greifen. An den mit den Öffnungen 14 versehenen Stellen des Folienapplikationsstreifens 12 ist dann für den Betrachter die Oberfläche der Banknote sichtbar. Der Folienapplikationsstreifen 12 wird durch die Öffnungen 14 um ein haptisches Echtheitskennzeichen ergänzt. Zusätzlich können die freiliegenden Oberflächenbereiche in den Öffnungen 14 mit weiteren Sicherheitsmerkmalen ausgestattet sein, wie nachfolgend genauer beschrieben.

In Fig. 2 sind die Öffnungen 16 in dem Hologramm-Folienapplikationsstreifen 12 in Form der Zahl "100" ausgebildet, die die Denomination der Banknote 10 angibt. Der Folienapplikationsstreifen 12 ist auf einem Flächenbereich der Banknote 10 aufgeklebt, auf den zuvor eine Sicherheitsschicht 18 aufgedruckt wurde. Die Sicherheitsschicht 18 ist durch eine fluoreszierende Partikel enthaltende Druckschicht gebildet, deren Emissionswellenlänge der einfachen Erkennbarkeit halber im sichtbaren Spektralbereich gewählt ist

Die fluoreszierenden Partikel der Druckschicht sind im Bereich der Öffnungen 16 erkennbar und können bei der Überprüfung der Echtheit der Banknote 10 beispielsweise mithilfe einer geeigneten Anregungsquelle, etwa einer UV-Lampe, zum Leuchten gebracht werden. Das Fehlen dieses Lumineszenzmerkmals kann von einem Betrachter oder einer automatischen Leseeinrichtung leicht erkannt und auf eine Manipulation oder Nachbildung der Banknote 10 geschlossen werden. Zugleich bilden die Öffnungen 16 aufgrund ihrer Form ein charakteristisches haptisches Erkennungsmerkmal, das auch ohne Überprüfung der Lumineszenz zur Echtheitsprüfung herangezogen werden kann.

Eine Banknote ist in Fig. 3 gezeigt. Dort ist der von einer lumineszierenden Sicherheitsschicht 20 bedruckte Flächenbereich der Banknote 10 etwas größer als der Folienapplikationsstreifen 12 selbst ausgebildet, so dass ein außerhalb des Streifens 12 liegender Lumineszenzbereich 22 entsteht. Dieser ermöglicht eine einfache maschinelle Echtheitsprüfung, da das Lumineszenzsignal der Bereiche 22 einem Lesegerät anzeigt, wo die Öffnungen 24, 26 des Folienapplikationsstreifens 12 zu suchen sind.

Der Folienapplikationsstreifen 12 enthält neben einer großflächigen Öffnung 24 auch eine Reihe von Mikroöffnungen 26, die so angeordnet sind, dass sie die Denomination der Banknote 10 darstellen. In der Fig. 3 ist die Größe der Mikroöffnungen 26 der Deutlichkeit halber übertrieben dargestellt. Tatsächlich können die Mikroöffnungen einen Durchmesser von 100 µm oder weniger, oder sogar von 50 µm oder weniger aufweisen.

Liegt, wie bei Fig. 2, die Emissionswellenlänge der Lumineszenzpartikel im sichtbaren Spektralbereich, kann die großflächige Öffnung 24 als leicht erkennbares visuelles Echtheitskennzeichen für einen Betrachter dienen. Das Lumineszenzsignal der Mikroöffnungen 26 ist dagegen aufgrund des geringen Durchmessers der Öffnungen 26 schwach, und nur mit geeigneten Detektoren in einem Lesegerät nachzuweisen. Die Lumineszenzstrahlung der großflächigen Öffnung 24 kann bei der Echtheitsprüfung als Referenzsignal dienen, auf das das erwartete schwache Signal der Mikroöffnungen kalibriert wird. Die Lumineszenz der Mikroöffnungen 26 ist für Dritte schwer zu reproduzieren und trägt somit zu einer hohen Fälschungssicherheit der Banknote 10 bei.

Fig. 4 zeigt ein Ausführungsbeispiel, bei dem ein Hologramm-Folienapplikationsstreifen 30 mit Fensterbereichen 32, 34 auf der Banknote 10 aufgebracht ist Anders als bei den oben beschriebenen Ausführungsbeispielen stellen die Fensterbereiche 32, 34 keine Ausnehmungen im Folienmaterial dar, sondern sind durch demetallisierte und damit transparente Bereiche in der ansonsten opaken Metallschicht des Folienstreifens 30 gebildet.

Die beiden Fensterbereiche 32 sind in Form des Zahlenwerts der Denomination der Banknote ausgebildet, im Ausführungsbeispiel in Form der Zahl "50", und geben den Blick auf die Oberfläche der Banknote 10 frei. Die Fensterbereiche 32 bilden damit eine auffällige Negativinformation in dem ansonsten mit optisch variablen Effekt erscheinenden Hologrammstreifen 30. Die Banknotenoberfläche unterhalb der Fensterbereiche 32 kann unbehandelt sein, oder mit einer Farbschicht oder einer Effektschicht, wie etwa einer lumineszierende oder optisch variable Partikel enthaltenden Schicht, versehen sein.

Der Hologrammstreifen 30 enthält weiter einen großflächigen Fensterbereich 34, der im Register zu einem in das Banknotenpapier eingebetteten Wasserzeichen 36 angeordnet ist Im Ausführungsbeispiel stellt das Wasserzeichen 36 ebenfalls den Zahlenwert der Währungsdenomination dar, so dass durch einen Vergleich des Wasserzeichens 36, der Fensterbereiche 32 und der aufgedruckten Denomination 38 die Echtheit der Banknote überprüft werden kann. Der Rand des großflächigen Fensterbereichs 34 ist mit einer kleinräumigen Struktur versehen, um die Nachahmung und Reproduktion des Hologrammstreifens 30 weiter zu erschweren.

Fig. 5 zeigt eine Banknote 10 mit zwei verschiedenen Folienapplikationselementen 40 bzw. 50 in Patchform nach weiteren Ausführungsbeispielen. Das Patchelement 40 entspricht in seinem Aufbau weitgehend dem oben beschriebenen Hologrammstreifen 30. In einem nicht erfindungsgemäßen Ausführungsbeispiel gibt ein zentraler Fensterbereich 42 des Hologrammpatches 40 den Blick auf ein Wasserzeichen 44 frei, relativ zu welchem der Hologrammpatch 40 auf der Banknote registerhaltig angeordnet ist. Der Fensterbereich 42 kann durch einen demetallisierten Bereich des Hologrammpatches 40 gebildet sein. Erfindungsgemäß ist der Hologrammpatch 40 mit einer Ausstanzung gleicher Größe versehen, die das Wasserzeichen 44 freilegt.

Das Patchelement 50 weist neben durchgehenden Öffnungen 52 in Buchstabenform einen transparenten zentralen Fensterbereich 54 auf. Wie am besten in Zusammenschau mit der Figur 6 zu erkennen, die einen Querschnitt der Banknote im Bereich des Patchelements 50 zeigt, weist die Banknote unterhalb des Fensterbereichs 54 einen transluzenten Bereich 56 auf.

Der transluzente Bereich 56 kann etwa durch das Einwirken einer geeigneten Substanz auf das Banknotenpapier erzeugt werden. Im Ausführungsbeispiel wurde dazu konzentrierte Schwefelsäure verwendet. Durch die Kombination des Fensterbereichs 54 des Patchelements mit dem transluzenten Bereich 56 der Banknote entsteht ein charakteristischer, im Durchlicht hell aufscheinender Bereich im Inneren des Patchelements 50.

## Patentansprüche

1. Datenträger (10), wie Banknote, Wertpapier oder Ausweiskarte mit einem auf seiner Oberfläche angeordneten Foliensicherheitselement (30; 40; 50) mit einem Foliensubstrat, das mit einem Sicherheitsmerkmal des Foliensubstrats versehen ist,
wobei das Foliensicherheitselement (30; 40; 50) einen Durchbrechungsbereich mit zumindest einer das Element durchbrechenden Aussparung aufweiset, **dadurch gekennzeichnet, dass**
der Datenträger ein eingebettetes Sicherheitsmerkmal (36; 44; 56) des Datenträgers aufweist, das durch ein Wasserzeichen (36; 44) des Datenträgers gebildet ist,
das Foliensicherheitselement (30; 40; 50) im Register zu dem Sicherheitsmerkmal (36; 44; 56) des Datenträgers auf den Datenträger aufgebracht ist so dass das Sicherheitsmerkmal (36; 44; 56) des Datenträgers zumindest teilweise von dem Foliensicherheitselernent (30; 40; 50) überdeckt ist und durch den Durchbrechungsbereich visuell und/oder maschinell erkennbar ist.

2. Datenträger nach Anspruch 1, **dadurch gekennzeichnet, dass** der Durchbrechungsbereich eine Mehrzahl von das Element durchbrechenden Aussparungen (14, 26) in Form von Mustern, Zeichen oder Codierungen aufweist.

3. Datenträger nach Anspruch 1 oder 2, **dadurch gekennzeichnet, dass** das Foliensicherheitselement (12; 30; 40; 50) einen Sicherheitsstreifen oder ein flächiges Transferelement zur Applikation auf einen Datenträger bildet.

4. Datenträger nach einem der Ansprüche 1 bis 3, **dadurch gekennzeichnet, dass** das Sicherheitsmerkmal (36; 44) des Datenträgers in das Innere des Datenträgers eingebettet ist.

5. Datenträger nach einem der Ansprüche 2 bis 4, **dadurch gekennzeichnet, dass** der Datenträger in einem Teilbereich mit einer Sicherheitsschicht (18, 20) versehen ist, die das Sicherheitsmerkmal des Datenträgers enthält.

6. Datenträger nach Anspruch 5, **dadurch gekennzeichnet, dass** die Sicherheitsschicht zumindest ein Sicherheitsmerkmal des Datenträgers enthält, das aus der Gruppe der lumineszierenden, metallischen, magnetischen oder elektrisch leitfähigen Stoffe oder der optisch variablen Pigmente ausgewählt ist.

7. Datenträger nach wenigstens einem der Ansprüche 1 bis 6, **dadurch gekennzeichnet, dass** der Datenträger einen transparenten oder transluzenten Bereich (56) enthält, der durch den Durchbrechungsbereich erkennbar ist.

8. Datenträger nach wenigstens einem der Ansprüche 1 bis 7, **dadurch gekennzeichnet, dass** der Datenträger zumindest zwei Sicherheitsmerkmale des Datenträgers mit unterschiedlichen physikalischen Eigenschaften enthält, die durch den Durchbrechungsbereich visuell und/ oder maschinell erkennbar sind.

9. Datenträger nach Anspruch 8, **dadurch gekennzeichnet, dass** die Sicherheitsmerkmale des Datenträgers nebeneinander, übereinander, oder einander teilweise überlappen angeordnet sind.

10. Datenträger nach wenigstens einem der Ansprüche 1 bis 9, **dadurch gekennzeichnet, dass** der Durchbrechungsbereich des Foliensicherheitselements (12; 30; 40; 50) visuell und/ oder maschinell erfassbare Informationen bildet, die zu anderen Informationen auf dem Datenträger (10) oder dem Foliensicherheitselement (12; 30; 40; 50) inhaltsgleich sind oder diese ergänzen.

11. Datenträger nach Anspruch 10, **dadurch gekennzeichnet, dass** zumindest ein Teil der Informationen auf dem Datenträger durch den Durchbrechungsbereich visuell und/oder maschinell erfassbar ist

12. Verfahren zum Herstellen eines Datenträgers nach einem der Ansprüche 1 bis 11, mit den Verfahrensschritten
- Bereitstellen eines Foliensicherheitselements, das ein Foliensubstrat mit einem Sicherheitsmerkmal des Foliensubstrats umfasst,
- Bereitstellen eines Datenträger-Rohkörpers mit einem Sicherheitsmerkmal des Datenträgers,
- Einbringen eines Durchbrechungsbereichs mit zumindest einer das Element durchbrechenden Aussparung in das Foliensicherheitselement, und
- Aufbringen des durchbrochenen Foliensicherheitselements auf den Datenträger-Rohkörper, so dass das Sicherheitsmerkmal des Datenträgers durch den Durchbrechungsbereich erkennbar ist.

13. Verfahren nach Anspruch 12, **dadurch gekennzeichnet, dass** der Durchbrechungsbereich in das Foliensicherheitselement perforiert oder gestanzt wird.

14. Verfahren nach einem der Ansprüche 12 oder 13, **dadurch gekennzeichnet, dass** der Datenträger in einem Teilbereich mit einer Sicherheitsschicht versehen wird, die das Sicherheitsmerkmal des Datenträgers enthält.

15. Verfahren nach Anspruch 14, **dadurch gekennzeichnet, dass** die Sicherheitsschicht aufgedruckt, aufgespritzt oder aufgerakelt, insbesondere im Siebdruck, Flexodruck oder Tiefdruck aufgebracht wird.

16. Verfahren nach wenigstens einem der Ansprüche 12 bis 15, **dadurch gekennzeichnet, dass** das Foliensicherheitselement im Transferverfahren auf den Datenträger-Rohkörper aufgebracht wird.

## Claims

1. A data carrier (10), such as a bank note, paper of value or identity card, having a foil security element (30; 40; 50) arranged on the surface thereof with a foil substrate provided with a security feature of the foil substrate,
wherein the foil security element (30; 40; 50) has a break-through region with at least one gap breaking through the element, **characterized in that**
the data carrier has an embedded security feature (36; 44; 56) of the data carrier, which is formed by a watermark (36; 44) of the data carrier,
the foil security element (30; 40; 50) is applied to the data carrier in register with the security feature (36; 44; 56) of the data carrier, so that the security feature (36; 44; 56) of the data carrier is covered at least partly by the foil security element (30; 40; 50) and is recognizable visually and/or by machine through the break-through region.

2. The data carrier according to claim 1, **characterized in that** the break-through region has a plurality of gaps (14, 26) breaking through the element in the form of patterns, characters or codings.

3. The data carrier according to claim 1 or 2, **characterized in that** the foil security element (12; 30; 40; 50) forms a security strip or a planar transfer element for application to a data carrier.

4. The data carrier according to any of claims 1 to 3, **characterized in that** the security feature (36; 44) of the data carrier is embedded inside the data carrier.

5. The data carrier according to any of claims 2 to 4, **characterized in that** the data carrier is provided in a partial region with a security layer (18, 20) containing the security feature of the data carrier.

6. The data carrier according to claim 5, **characterized in that** the security layer contains at least one security feature of the data carrier that is selected from the group of luminescent, metallic, magnetic or electroconductive substances or optically variable pigments.

7. The data carrier according to at least one of claims 1 to 6, **characterized in that** the data carrier contains a transparent or translucent region (56) which is recognizable through the break-through region.

8. The data carrier according to at least one of claims 1 to 7, **characterized in that** the data carrier contains at least two security features of the data carrier with different physical properties which are recognizable visually and/or by machine through the break-through region.

9. The data carrier according to claim 8, **characterized in that** the security features of the data carrier are arranged side by side, one above the other, or so as to partly overlap each other.

10. The data carrier according to at least one of claims 1 to 9, **characterized in that** the break-through region of the foil security element (12; 30; 40; 50) forms visually and/or machine detectable information which is identical in content to, or supplements, other information on the data carrier (10) or the foil security element (12; 30; 40; 50).

11. The data carrier according to claim 10, **characterized in that** at least part of the information on the data carrier is detectable visually and/or by machine through the break-through region.

12. A method for producing a data carrier according to any of claims 1 to 11, having the method steps of
- supplying a foil security element comprising a foil substrate with a security feature of the foil substrate,
- supplying a data carrier blank with a security feature of the data carrier,
- forming in the foil security element a break-through region with at least one gap breaking through the element, and
- applying the broken-through foil security element to the data carrier blank, so that the security feature of the data carrier is recognizable through the break-through region.

13. The method according to claim 12, **characterized in that** the break-through region is perforated or stamped into the foil security element.

14. The method according to one of claims 12 to 13, **characterized in that** the data carrier is provided in a partial region with a security layer containing the security feature of the data carrier.

15. The method according to claim 14, **characterized in that** the security layer is printed, sprayed or doctored on, in particular applied by screen printing, flexographic printing or gravure printing.

16. The method according to at least one of claims 12 to 15, **characterized in that** the foil security element is applied to the data carrier blank by the transfer method.

## Revendications

1. Support de données (10) tel que billet de banque, papier-valeur ou carte d'identification doté d'un élément de sécurité en pellicule (30; 40; 50) agencé sur sa surface et comportant un substrat en pellicule pourvu d'une caractéristique de sécurité du substrat en pellicule,
l'élément de sécurité en pellicule (30; 40; 50) présentant une zone de transpercement ayant au moins un évidement transperçant l'élément,
**caractérisé en ce que**
le support de données comporte une caractéristique de sécurité (36; 44; 56) du support de données constituée par un filigrane (36; 44) du support de données,
l'élément de sécurité en pellicule (30; 40; 50) est appliqué en registre par rapport à la caractéristique de sécurité (36; 44; 56) du support de données sur le support de données, de telle sorte que la caractéristique de sécurité (36; 44; 56) du support de données est au moins partiellement recouverte par l'élément de sécurité en pellicule (30; 40; 50) et est reconnaissable visuellement et/ou par machine par la zone de transpercement.

2. Support de données selon la revendication 1, **caractérisé en ce que** la zone de transpercement présente une pluralité d'évidements (14, 26) transperçant l'élément sous forme de motifs, signes ou codifications.

3. Support de données selon la revendication 1 ou 2, **caractérisé en ce que** l'élément de sécurité en pellicule (12; 30; 40; 50) constitue un ruban de sécurité ou un élément de transfert plan pour l'application sur un support de données.

4. Support de données selon une des revendications de 1 à 3, **caractérisé en ce que** la caractéristique de sécurité (36; 44) du support de données est encastrée à l'intérieur du support de données.

5. Support de données selon une des revendications de 2 à 4, **caractérisé en ce que** le support de données est, dans une zone partielle, pourvu d'une couche de sécurité (18; 20) qui contient la caractéristique de sécurité du support de données.

6. Support de données selon la revendication 5, **caractérisé en ce que** la couche de sécurité contient au moins une caractéristique de sécurité du support de données qui est sélectionnée parmi le groupe des substances luminescentes, métalliques, magnétiques ou électroconductrices ou des pigments optiquement variables.

7. Support de données selon au moins une des revendications de 1 à 6, **caractérisé en ce que** le support de données comprend une zone (56) transparente ou translucide qui est reconnaissable par la zone de transpercement.

8. Support de données selon au moins une des revendications de 1 à 7, **caractérisé en ce que** le support de données contient au moins deux caractéristiques de sécurité du support de données dotées de propriétés physiques différentes qui sont reconnaissables visuellement et/ou par machine par la zone de transpercement.

9. Support de données selon la revendication 8, **caractérisé en ce que** les caractéristiques de sécurité du support de données sont agencées les unes à côté ou au-dessus des autres ou de manière se chevauchant partiellement entre elles.

10. Support de données selon au moins une des revendications de 1 à 9, **caractérisé en ce que** la zone de transpercement de l'élément de sécurité en pellicule (12; 30; 40; 50) constitue des informations qui sont perceptibles visuellement et/ou par machine et dont le contenu est identique à celui d'autres informations se trouvant sur le support de données (10) ou sur l'élément de sécurité en pellicule (12; 30; 40; 50) ou qui complètent ces dernières.

11. Support de données selon la revendication 10, **caractérisé en ce qu'**au moins une partie des informations sur le support de données est perceptible visuellement et/ou par machine par la zone de transpercement.

12. Procédé de fabrication d'un support de données selon une des revendications de 1 à 11, comprenant les étapes de procédé
- mise à disposition d'un élément de sécurité en pellicule qui comporte un substrat en pellicule pourvu d'une caractéristique de sécurité du substrat en pellicule,
- mise à disposition d'un corps brut de support de données pourvu d'une caractéristique de sécurité du support de données,
- génération d'une zone de transpercement comportant au moins un évidement transperçant l'élément dans l'élément de sécurité en pellicule, et
- application de l'élément de sécurité en pellicule transpercé sur le corps brut de support de données, de telle sorte que la caractéristique de sécurité du support de données est reconnaissable par la zone de transpercement.

13. Procédé selon la revendication 12, **caractérisé en ce que** la zone de transpercement est perforée ou découpée dans l'élément en pellicule.

14. Procédé selon une des revendications 12 ou 13, **caractérisé en ce que** le support de données est, dans une zone partielle, pourvu d'une couche de sécurité qui contient la caractéristique de sécurité du support de données.

15. Procédé selon la revendication 14, **caractérisé en ce que** la couche de sécurité est appliquée par impression, par nébulisation ou à la racle, en particulier par sérigraphie, par flexographie ou par impression en creux.

16. Procédé selon au moins une des revendications de 12 à 15, **caractérisé en ce que** l'élément de sécurité en pellicule est appliqué par un procédé de transfert sur le corps brut de support de données.
